Europäisches Patentamt

(19) European Patent Office

Office européen des brevets

(11) Numéro de publication: **0 258 071 B1**

(12) **FASCICULE DE BREVET EUROPEEN**

(45) Date de publication du fascicule du brevet:
11.04.90

(51) Int. Cl.⁴: **G01N 21/90**

(21) Numéro de dépôt: **87401041.6**

(22) Date de dépôt: **27.05.82**

(60) Numéro de publication de la demande initiale en application
de l'article 76 CBE: **0095541**

(54) Circuits de traitement et de commande d'exposition-lecture pour caméras.

(43) Date de publication de la demande:
**02.03.88 Bulletin 88/9**

(45) Mention de la délivrance du brevet:
**11.04.90 Bulletin 90/15**

(84) Etats contractants désignés:
**AT BE CH DE FR GB IT LI LU NL SE**

(56) Documents cités:
**FR-A- 2 301 006**
**FR-A- 2 380 551**
**FR-A- 2 401 415**
**FR-A- 2 437 616**
**GB-A- 2 080 946**

(73) Titulaire: **I 2S, 239, Rue du Jardin Public,
F-33000 Bordeaux(FR)**

(72) Inventeur: **Ricros, Alain, 96 rue Fondaudège,
F-33000 Bordeaux(FR)**
Inventeur: **Blouin, Jean-Louis, Hennson, Chateau de
Malissol, F-38200 Vienne(FR)**
Inventeur: **Darnault, Jean-Paul, Baurech,
F-33800 Combes lieu dit "St James"(FR)**
Inventeur: **Pinson, Yannick, Résidence St.Michel,
F-33700 Merignac(FR)**

(74) Mandataire: **Hirsch, Marc-Roger, Cabinet Hirsch 34 rue
de Bassano, F-75008 Paris(FR)**

ACTORUM AG

## Description

La présente invention a pour objet un circuit de traitement vidéo et de commande d'exposition-lecture pour caméras à dispositif matriciel de transfert de charges et, plus particulièrement, pour caméras utilisées pour l'inspection d'objets transparents ou translucides par contraste de transparence, en vue de détecter d'éventuels défauts ou corps étrangers, notamment dans le cas de récipients, de défauts ou de corps se trouvant à l'intérieur, ou encore sur ou dans la paroi de ces récipients.

Dans la demande de brevet européen n° 0 095 541 déposée au nom des demandeurs de la présente, le 7 décembre 1983 et instituée "Procédé et dispositif d'inspection automatique par contraste de transparence, notamment de récipients" a été décrit un procédé d'inspection par contraste de transparence d'objets transparents ou translucides consistant à éclairer transversalement la totalité ou la quasi totalité de l'objet, et à en projeter l'image en contre-jour sur les dispositifs matriciels d'au moins une caméra à axe centré sur l'objet, caractérisé par le fait que ledit procédé comprend de plus les étapes suivantes:

a.- élimination à l'aide d'une fenêtre électronique appropriée à chaque type d'objet, tout signal provenant de points élémentaires desdits dispositifs photosensibles matriciels à transferts de charge situés hors de ladite fenêtre;

b.- analyse successive de chaque point élémentaire situé dans ladite fenêtre en ne prenant en compte qu'un nombre prédéterminé de points élémentaires voisins du point élémentaire considéré;

c.- comparaison du niveau du signal électrique fourni par chaque point élémentaire et pondéré par les signaux électriques fournis par lesdits points élémentaires voisins avec un niveau électrique de référence pré-établi pour chaque type d'objet;

d.- déclenchement du rejet ou du repérage de l'objet inspecté lorsque le nombre de points élémentaires détectés délivrant un signal électrique hors dudit niveau électrique de référence pour au moins l'une des caméras est supérieur à un nombre prédéterminé.

A été également décrit un dispositif pour la mise en oeuvre du procédé, comprenant une source d'éclairement transversal des objets circulant grâce à des moyens de déplacement faisant circuler lesdits objets entre cette source d'éclairement et au moins une caméra à dispositifs matriciels photosensibles centrée sur lesdits objets et prenant à leur passage dans le champ leur image en contre-jour, caractérisé par le fait:

a.- qu'au moins une caméra à dispositif de transfert de charges est associée à un générateur de fenêtre électronique se superposant aux signaux d'image issus de la matrice, cette fenêtre correspondant aux contours des objets à inspecter, ce qui élimine les signaux hors fenêtre et garde ceux issus de l'objet;

b.- que des moyens d'analyse traitent séquentiellement le niveau électrique du signal émis par chaque point élémentaire matriciel à l'intérieur de ladite fenêtre, avec prise en compte des niveaux de signaux des points élémentaires immédiatement voisins;

c.- que des moyens comparent le niveau ainsi pondéré de chaque point élémentaire à un niveau de référence prédéterminé réglable;

d.- que des moyens comptent le nombre de points élémentaires ainsi considérés comme hors références et ordonnent à un système le rejet ou le repérage approprié de tout objet ainsi considéré comme hors référence.

Ce procédé et ce dispositif présentent des avantages par rapport à l'art antérieur. Il existait, en effet, différents systèmes d'inspection par contraste de transparence de récipients transparents ou translucides, comme c'est le cas de la demande de brevet français n° 2 437 616 (KIRIN BEER K.K.), dans lesquels on éclaire transversalement en tout ou partie des récipients pour en projeter l'image en contre-jour sur des dispositifs matriciels de caméras. De tels dispositifs présentent le désavantage de ne pas inspecter chaque récipient dans des conditions identiques à celles des autres.

L'invention selon la demande européenne ci-dessus citée avait donc pour but essentiel d'assurer une régularité aussi précise que possible dans les conditions de prise de vue de chaque objet inspecté.

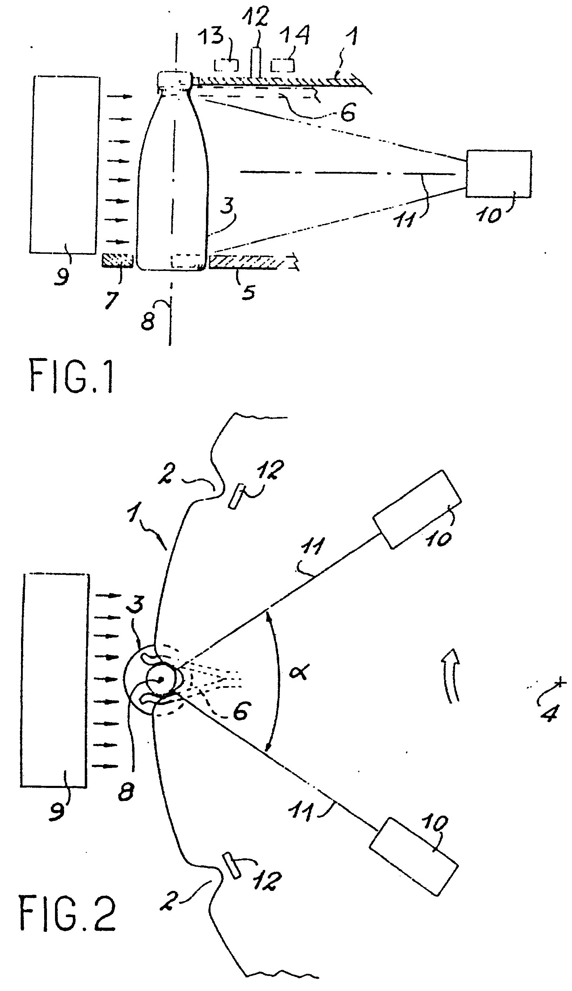

Dans cette demande européenne n° 0 095 541, on a représenté schématiquement à la figure 1 ci-jointe, le mode d'analyse de contraste par transparence d'une bouteille prise à titre d'exemple d'objet à inspecter, la figure 2 représentant schématiquement une vue de dessus du dispositif de la figure 1.

Sur les figures 1 et 2, on a représenté schématiquement en 1 une étoile rotative d'un type classique utilisé couramment dans les chaînes d'embouteillage. Ce dispositif est inséré dans un convoyeur à un stade ou un autre du conditionnement et est chargé de présenter un à un les récipients à un poste d'inspection, de remplissage, de capsulage, d'étiquettage, etc.

Le dispositif représenté partiellement comprend à la manière habituelle un disque 1 encoché à sa périphérie régulièrement en 2 pour recevoir le goulot des bouteilles 3 à traiter.

Le disque 1 à son axe 4 vertical et est entraîné en rotation continue par un moyen moteur approprié non représenté.

Parallèlement à l'étoile 1 est disposée une seconde étoile 5 solidaire de la première et également encochée à sa périphérie pour recevoir l'extrémité cylindrique inférieure des bouteilles 3.

Les bouteilles 3 sont maintenues en place dans leurs encoches par une pince 6 montée sur la face inférieure de l'étoile 1 et associée à chaque encoche 2, une telle pince enserrat le goulot immédiatement sous le bourrelet supérieur, les bouteilles étant ainsi en suspension durant tout le temps où elles se trouvent sur l'étoile 1. Un tel dispositif et ses moyens de commande étant courants ne seront pas décrits plus en détails.

Le calage latéral à la partie inférieure des bouteilles est complété par une plaque 7 fixe en arc de cercle, disposée au droit de l'étoile 5 et laissant juste le libre passage des bouteilles.

Les bouteilles 3 se déplacent ainsi en translation circulaire avec leur axe 8 vertical et son amenées les unes après les autres au poste d'inspection conforme à l'invention lequel est constitué d'une boîte à lumière 9 montée fixe d'un côté de la trajectoire des bouteilles 3 et de deux caméras 10 à transfert de charges montées également fixes mais de l'autre côté de ladite trajectoire.

La boîte à lumière 9 est disposée de manière à éclairer le ventre et le col de la bouteille 3. De préférence, la boîte 9 comporte un écran lumineux diffusant la lumière de manière régulière, le plan de l'écran étant parallèle à l'axe 8 de la bouteille et disposé de façon que chaque caméra 10 voie la bouteille 3 au poste d'inspection en contre-jour.

Les axes de visée 11 des deux caméras 10 sont horizontaux et se coupent sensiblement sur l'axe 8 de la bouteille, l'angle alpha forme entre les axes 11 étant de plusieurs dizaines de degrés (entre 70 et 100 degrés par exemple).

Le dispositif de présentation des bouteilles 3 au poste d'inspection est également muni, à la manière connue, d'un dispositif de détection en position constitué d'index opaques 12 fixés sur la face supérieure de l'étoile 1 au droit de chaque encoche et susceptible de couper le faisceau lumineux d'un détecteur photoélectrique fixe disposé au droit du poste d'inspection et comprenant une source lumineuse 13 et une cellule photoélectrique 14, ce détecteur n'étant pas représenté sur la figure 2 par souci de clarté.

La présente invention a pour but de fournir dans des cas d'applications tels que celui ci-dessus donné à titre d'exemple des circuits traitement et de déclenchement d'exposition-lecture pour caméras.

Elle concerne plus particulièrement un circuit de traitement et de commande d'exposition-lecture pour caméra à dispositif matriciel à transfert de charges caractérisé par le fait que des moyens de détection déclenchent instantanément la prise de vue à l'arrivée d'un objet en position adéquate et l'émission par le dispositif matriciel des signaux d'image, des moyens d'analyse traitant séquentiellement le niveau électrique des signaux successifs émis par chaque point élémentaire du dispositif matriciel en pondérant ce niveau par prise en compte des informations fournies par des points élémentaires immédiatement voisins, des moyens comparant le niveau ainsi pondéré correspondant à chaque point élémentaire à un niveau de référence prédéterminé réglable, des moyens comptant le nombre des points élémentaires considérés comme hors référence et émettant un signal de rejet pour chaque objet ainsi considéré comme hors référence.

Un tel circuit comprend un générateur de fenêtre électronique correspondant au contour d'objets à inspecter, des dispositifs électroniques superposant aux signaux d'image issus du dispositif matriciel ceux correspondant à la fenêtre, afin d'éliminer les signaux hors fenêtre et garder ceux issus de l'objet, les moyens d'analyse traitant séquentiellement le niveau électrique du signal émis par chaque point élémentaire du dispositif matriciel à l'intérieur de ladite fenêtre.

Selon un mode de réalisation préféré de l'invention, lesdits moyens d'analyse séquentielle des signaux issus des points élémentaires prenant en compte ceux issus des points élémentaires immédiatement voisins sont des registres à décalage en série correspondant aux lignes, à chacun desquels sont associés des registres en série correspondant à des points et comportant un système convertissant sous forme numérique le niveau électrique analogique du signal issu de chaque point élémentaire, pondéré par celui des points immédiatement environnants et en se référant à un seuil prédéterminé réglable.

Un tel circuit conforme à l'invention peut être, selon un autre mode de réalisation, associé à trois registres à décalage de ligne à chacun desquels sont associés trois registres de points de façon à assurer la pondération du niveau de signal relatif à un point par celui des huit points de la matrice qui l'entoure.

Selon une variante de réalisation de l'invention, les moyens comparateurs de niveau ainsi pondéré de chaque point élémentaire sont constitués par un additionneur relié à toutes les sorties binaires des registres de points et dont la sortie est connectée à un compatateur relié par une seconde entrée à une source de signal délivrant une valeur programmable et dont la sortie est connectée à un compteur.

Un circuit selon l'invention peut comprendre un dispositif d'asservissement de la durée d'exposition de chaque image à la vitesse de passage des objets devant la caméra.

Ces circuits selon l'invention s'appliquent notamment à l'inspection par contraste de transparence d'objets transparents ou translucides au cours de laquelle on éclaire transversalement la totalité ou la quasi totalité de l'objet et l'on en prend l'image en contre-jour.

Dans ce cas, si le circuit constate une anomalie de l'objet inspecté, il émet un signal de rejet qui déclenche le repérage ou l'élimination de l'objet considéré comme hors référence.

Pour mieux faire comprendre les caractéristiques techniques et les avantages de la présente invention, on va en décrire un exemple de réalisation étant bien entendu que celui-ci n'est pas limitatif quant à son mode de mise en oeuvre et aux applications qu'on peut en faire. On se reportera aux figures 1 et 2 décrites ci-dessus ainsi qu'aux figures suivantes:

- la figure 3 est un schéma fonctionnel illustrant une partie du traitement des signaux vidéo en provenance des caméras; et
- la figure 4 est un schéma fonctionnel illustrant la phase finale de traitement desdits signaux vidéo.

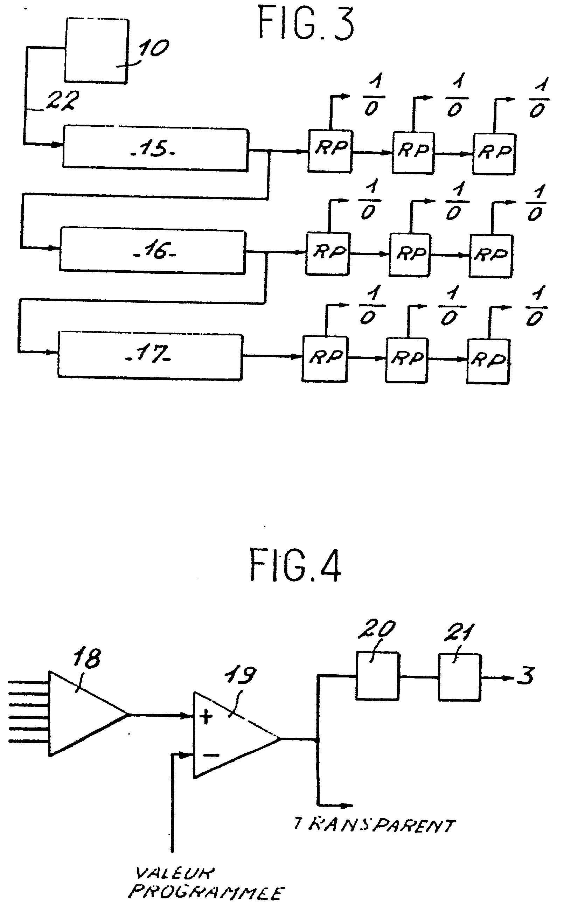

Les figures 3 et 4 illustrent la chaîne de traitement électronique des signaux vidéo délivrés par une caméra 10.

Les signaux vidéo issus de la caméra 10 sont envoyés dans trois registres à décalage 15, 16, 17 connectés en ligne.

A chaque registre 15, 16, 17 sont associés trois registres-point RP en ligne, chacun effectuant la comparaison du signal analogique reçu avec un seuil réglable de façon à délivrer une information numérique (1 ou 0).

Les sorties numériques des registres-point RP sont toutes reliées à un additionneur 18 (figure 4) dont la sortie est connectée à l'une des entrées d'un comparateur 19. L'autre entrée du comparateur reçoit une valeur programmable. Le comparateur 19 génère ou non en sortie un signal. S'il n'y a pas de signal, c'est l'indication d'une conformité de l'objet; s'il n'y a signal, celui-ci est envoyé sur un compteur 20 déclenchant au bout d'un compte prédéterminé réglable un dispositif symbolisé en 21 de rejet ou de repérage de l'objet 3 quivient d'être contrôlé.

Si l'on se réfère à l'exemple d'application illustré sur les figures 1 et 2, le fonctionnement complet et détaillé du dispositif décrit ci-dessus est le suivant. Les bouteilles 3 sont amenées par l'étoile 1 les uns après les autres au poste d'inspection où elles sont présentées sans temps d'arrêt devant les deux caméras 10 qui sont déclenchées simultanément grâce au dispositif à cellule photoélectrique 12, 13, 14.

Chaque caméra est équipée d'un circuit conforme à la présente invention.

Pour ce type de caméra à transfert de charges, le temps d'exposition est de l'ordre de 0,2 ms à 10 ms en sorte que le dispositif selon l'invention peut absorber des vitesses de défilement allant jusqu'à 60.000 bouteilles à l'heure.

La prévision de deux caméras 10 décalées angulairement de 90° environ permet de couvrir pour l'analyse par transparence toute la surface de la bouteille 3, ou tout au moins la majeure partie de celle-ci, sans aucune zone morte.

Les caméras à transfert de charges comprennant un dispositif photosensible matriciel constitué d'un certain nombre de points élémentaires (280 par exemple) qu'on appellera par la suite pels.

En bref, l'image est formée sur la trame de pels et mise en mémoire sur une trame de registres à décalage en ligne.

Au niveau de chaque pel on a une charge proportionnelle au flux de lumière et les charges accumulées par tous les pels pendant l'exposition sont transférées par décalages successifs ligne à ligne dans la mémoire.

La lecture de la mémoire se fait par décalage ligne par ligne puis point par point de façon à explorer toute la trame photosensible. Pour chaque point lu, la quantité de charge est convertie en un niveau de tension proportionnel. Ce sont ces signaux analogiques qui sont délivrés en 22 sur la figure 3 par la caméra.

Pour résumer, une telle caméra comprend un système optique, un capteur ou senseur (dispositif photosensible matriciel), une électronique de commande d'exposition-lecture et une électronique vidéo qui conditionne et met en forme le signal de sortie du capteur ou senseur selon le standard ou les normes des signaux de télévision.

Conformément à l'invention, les signaux 22 provenant de chaque caméra 10 sont envoyés sur le jeu de registres à décalage 15 à 17. Ces registres comportent autant de points que les registres des caméras 10 (soit 208 par exemple).

Les trois dernières informations de chaque registre 15 à 17 sont mémorisées dans trois registres-point RP. Ainsi, les signaux vidéo issus de chaque caméra sont mémorisés par lignes entières et on dispose en sortie des registres 15 à 17 des niveaux d'intensité des trois points consécutifs sur une colonne donnée.

Les informations mémorisées dans les registres-point RP sont numérisées par comparaison avec un seuil réglable ajusté en fonction de la transparence du type de bouteille à contrôler. Chaque enregistrement RP délivre donc un signal 0 ou 1 correspondant à un point blanc (transparence) ou à un point noir (non transparence) de l'image de la bouteille.

Les registres-point RP fournissent donc une information binaire relative à une zone de 3 x 3 = 9 points de l'image de la bouteille en prenant en compte une zone d'étendant sur 9 pels, zone qui balaiera progressivement toute l'image.

La pondération du niveau de chaque pel en fonction des huit pels immédiatement environnants se fait suivant un algorithme de traitement approprié fonction du type de bouteille, du matériau, et de la forme et nature des corps étrangers ou défauts à détecter.

Une telle pondération se fait par programme par exemple en fonction du niveau moyen de transparence de chaque récipient, de la position dans l'image du point considéré et de la position de chaque point environnant relativement audit point considéré.

Afin d'éliminer toute cause de perturbation étrangère au but recherché, des circuits incorporés dans l'unité de traitement associé aux caméras 10 et non représentés sur les dessins, sont chargés à la manière habituelle et bien connue de générer une fenêtre électronique d'inspection définie par la conformation du type de bouteille à contrôler. Une telle fenêtre est destinée à ne prendre en compte que les signaux provenant des seuls pels se trouvant dans la zone image de la bouteille formée sur le capteur ou senseur de chaque caméra 10.

Des moyens sont bien entendu prévus pour passer d'un type de fenêtre à un autre lorsque le type de bouteille à contrôler est changé.

Toutes les sorties binaires des registres-point RP sont reliées à l'additionneur 18 (figure 4) et on compare la moyenne pondérée issue de l'additionneur 18 avec une valeur numérique programmable dans le comparateur 19 qui délivre un signal binaire qui est pour chaque pel considéré compte tenu de son environnement immédiat, soit un 0 (la zone élémentaire de la bouteille correspondant au pel considéré étant tenue pour transparente selon les critères retenus) soit un 1 (la zone en question étant considérée comme non transparente).

Les signaux binaires 1 sont comptés dans le compteur 20 dans lequel, lorsque le compte atteint un seuil prédéterminé réglable, délivre un signal au dispositif 21 qui est soit un système classique de mise à l'écart de la bouteille qui vient d'être contrôlée, soit un dispositif de repérage quelconque permettant ultérieurement d'enlever la bouteille du convoyeur.

De préférence, il est toutefois prévu que le compteur 20 ne comptabilise que les signaux 1 qui se suivent, le compteur étant remis à zéro si un 0 suit un 1 afin d'ignorer des défauts considérés comme non significatifs ou trop restreints en dimension.

Comme on l'a indiqué ci-dessus, chaque caméra 10 des figures 1 et 2 est suivie des mêmes circuits de traitement que ceux représentés sur les figures 3 et 4, la bouteille contrôlée étant écartée ou repérée si l'une des deux caméras 10 ou si les deux "voient" un corps étranger ou un défaut.

Les divers seuils de comparaison ainsi que l'algorithme de traitement évoqué plus haut permettant de tenir compte, et par suite de considérer comme des défauts, ou au contraire de ne pas tenir compte, de toutes sortes d'anomalies de contrastes par exemple à des rayures ou traces d'usure, à des morceaux d'étiquette ou des corps étrangers adhérant à la paroi de la bouteille ou contenus dans celle-ci, à des résidus de liquides, à des taches, etc., suivant des critères de "défauts" très variables et qu'il est facile d'adapter à chaque type de récipient à contrôler.

Pour faciliter l'exploration de chaque objet, il est prévu une électronique de commande d'exposition-lecture utilisant les caractéristiques d'un capteur à transfert de charge par trame.

Cette électronique a pour effet:
- de déclencher l'intégration de la zone image du capteur au moment précis du passage de l'objet à étudier, ce qui a pour conséquence de disposer d'images dans lesquelles les objets à analyser sont toujours situées au même endroit d'une prise de vue à l'autre et ceci en rapport avec l'utilisation d'une fenêtre d'exploration;
- d'asservir la durée d'exposition de chaque image à la vitesse de passage des objets devant la caméra de manière à diminuer le flou de l'image en conservant un bon contraste;
- de sauvegarder rapidement l'image dans la mémoire à transfert de charge de manière à pouvoir relire l'image-objet ainsi obtenue à une vitesse indépendante du temps d'exposition et d'un éventuel cycle de balayage.

L'intégration simultanée des pels dans un tels capteur permet également de s'affranchir de phénomènes de distorsion d'image d'objet en mouvement, phénomènes bien connus dans les caméras à balayage classique.

Il est à noter que l'invention peut s'appliquer à tout récipient transparent ou translucide mais également d'une manière générale à tout corps transparent ou translucide capable d'être contrôlé par contraste de transparence en vue de la détection d'éventuels défauts, corps étrangers ou autres causes du contraste de transparence.

Dans le mode de réalisation représenté et décrit ci-dessus, on a prévu le balayage du contenu de la mémoire des capteurs ou senseurs des caméras 10 en prenant en compte successivement chaque pel et ses huit pels environnants, mais on pourrait bien entendu, soit étendre, soit restreindre une telle prise en compte en adaptant en conséquence, d'une part, le nombre de registres tels que 15 à 17 et, d'autre part, le nombre de registres-point tels que RP associés à chaque registre, le principe et les techniques de pondération demeurant inchangés. Une telle adaptation peut être nécessitée par le type de "defauts" à repérer.

Enfin, l'invention n'est évidemment pas limitée au mode de réalisation représenté et décrit ci-dessus mais en couvre au contraire toutes les variantes, notamment en ce qui concerne la nature, la forme. la disposition de la boîte à lumière 9, la disposition mutuelle de celle-ci et des caméras 10 par rapport à la trajectoire des bouteilles 3 ou autres corps à contrôler, ainsi que les moyens électroniques de traitement des signaux délivrés par les caméras.

**Revendications**

1. Circuit de traitement et de commande d'exposition-lecture pour caméras (10) à dispositif matriciel de transfert de charges destinées à l'inspection d'objets (3), ledit circuit comportant des moyens de détection (12, 13, 14) repérant l'arrivée de chaque objet (3) en une position dite d'inspection, caractérisé par le fait que lesdits moyens de détection (12, 13, 14) déclenchent instantanément la prise de vue à l'arrivée de l'objet (3) en position d'inspection et l'émission par le dispositif matriciel des signaux d'image, des moyens d'analyse (15, 16, 17, RP) traitant séquentiellement le niveau électrique des signaux successifs émis par chaque point élémentaire du dispositif matriciel en pondérant ce niveau par prise en compte des informations fournies par des points élémentaires immédiatement voisins, des moyens (18, 19) comparent le niveau ainsi pondéré correspondant à chaque point élémentaire à un niveau de référence prédéterminé réglable, des moyens (20) comptant le nombre des points élémentaires considérés comme hors référence et émettant un signal de rejet pour chaque objet ainsi considéré comme hors référence.

2. Circuit selon la revendication 1, caractérisé par le fait qu'il comprend un générateur de fenêtre électronique correspondant au contour des objets (3) à inspecter, que des dispositifs électroniques superposent aux signaux d'image issus du dispositif matriciel ceux correspondant à la fenêtre, afin d' éliminer les signaux hors fenêtre et garde ceux issus de l'objet, les moyens d'analyse (15, 16, 17, RP) traitant séquentiellement le niveau électrique du signal émis par chaque point élémentaire du dispositif matriciel à l'intérieur de ladite fenêtre.

3. Circuit selon l'une des revendications 1 ou 2, caractérisé par la fait qu'un système (20) recevant le signal de rejet assure ce rejet ou le repérage de toute objet (3) considéré comme hors référence.

4. Circuit selon l'une des revendications 1 à 3, caractérisé par le fait que lesdits moyens d'analyse séquentielle des signaux issus des points élémentaires prenant en compte ceux issus des points élémentaires immédiatement voisins sont des registres à décalage en série (15 à 17) correspondant aux lignes, à chacun desquels sont associés des registres (RP) en série correspondant à des points et comportant un système convertissant sous forme numérique le niveau électrique analogique du signal issu de chaque point élémentaire, pondéré par celui des points immédiatement environnants et en se référant à un seuil prédéterminé réglable.

5. Circuit selon l'une des revendications 1 à 4, caractérisé par le fait qu'il est associé à trois registres à décalage (15 à 17) de ligne à chacun desquels sont associés trois registres de points (RP) de façon à assurer la pondération du niveau de signal relatif à un point par celui des huit points de la matrice qui l'entoure.

6. Circuit selon l'une des revendications 1 à 5, caractérisé par le fait que les moyens comparateurs de niveau ainsi pondéré de chaque point élémentaire sont constitués par un additionneur (18) relié à toutes les sorties binaires des registres de points (RP) et dont la sortie est connectée à un comparateur (19) relié par une seconde entrée à une source de signal délivrant une valeur programmable et dont la sortie est connectée à un compteur (20).

7. Circuit selon l'une des revendications 1 à 6, caractérisé par le fait qu'il comprend un dispositif d'asservissement de la durée d'exposition de chaque image à la vitesse de passage des objets devant la caméra.

8. Application du circuit selon l'une des revendications 1 à 7, à l'inspection par contraste de transparence d'objets (3) transparents ou translucides au cours de laquelle on éclaire transversalement la totalité ou la quasi totaliteé de l'objet (3) et l'on en prend l'image en contre-jour.

**Patentansprüche**

1. Auswertungs- und Steuerungsschaltung zur Belichtungsabtastung für Kameras (10) mit matrixförmiger Ladungsübertragung zur Prüfung von Gegenständen (3), welche Schaltung über Abtastmittel (12, 13, 14) verfügt, die das Eintreffen jedes Gegenstandes (3) in einer Prüfungsstellung anzeigen, dadurch gekennzeichnet, dass die Abtastmittel (12, 13, 14) bei Eintreffen des Gegenstandes (3) in der Prüfungsstellung augenblicklich die Aufnahme auslösen, sowie die Erzeugung von Bildsignalen durch die Matrixvorrichtung, wobei Analysemittel (15, 16, 17, RP) den elektrischen Wert der aufeinanderfolgenden, von jedem Elementarpunkt der Matrixvorrichtung abgegebenen Signale sequentiell behandeln durch Gewichtung dieses Wertes nach Massgabe der von den unmittelbar benachbarten Elementarpunkten gelieferten Informationen, wobei Mittel (18, 19) den jedem Elementarpunkt entsprechenden, so gewichteten Wert mit einem vorgegebenen einstellbaren Vergleichsgrenzwert vergleichen, und wobei Mittel (20) die Zahl der als ausserhalb des Vergleichsgrenzwertes liegend geltenden Elementarpunkte zählen und für jeden als ausserhalb des Vergleichsgrenzwerte liegend geltenden Gegenstand ein Ausschussignal aussenden.

2. Schaltung nach Anspruch 1, dadurch gekennzeichnet, dass sie über einen elektronischen Fenstergenerator zur Erzeugung eines Fensters verfügt, das dem Umriss des zu prüfenden Gegenstandes (3) entspricht, dass durch elektronische Vorrichtungen den von den Matrixvorrichtungen abgegebenen Bildsignalen die dem Fenster entsprechenden Signale überlagert werden, wodurch die ausserhalb des Fensters gelegenen Signale eliminiert werden und die dem jeweiligen Gegenstand entsprechenden Signale erhalten bleiben, wobei die Analysiermittel (15, 16, 17, RP) in vorbestimmter Folge den elektrischen Wert des von jedem Elementarpunkt der lichtempfindlichen Vorrichtungen innerhalb des Fensters abgegebenen Signals auswerten.

3. Schaltung nach einem der Ansprüche 1 oder 2, dadurch gekennzeichnet, dass das Ausschussignal einem System (20) zugeführt wird, das die Aussonderung oder Markierung jedes als ausserhalb der Sollwerte liegend betrachteten Gegenstandes (3) sicherstellt.

4. Schaltung nach einem der Ansprüche 1 bis 3, dadurch gekennzeichnet, dass die Mittel zur sequentiellen Analyse der von den Elementarpunkten ausgehenden Signale, die unter Berücksichtigung der Signale der unmittelbar benachbarten Elementarpunkte erfolgt, den Zeilen entsprechende Schieberegister (15 bis 17) sind, deren jedes in Serie mit einem den Punkten entsprechenden Register (RP) verbunden ist, wobei ein System vorgesehen ist zur Umwandlung der analogen elektrischen Werte des von jedem Elementarpunkt ausgehenden Signales, gewichtet mit den Werten der unmittelbar benachbarten Punkte, unter Bezugnahme auf vorgegebene einstellbare Werte in digitale Form verfügen.

5. Schaltung nach einem der Ansprüche 1 bis 4, dadurch gekennzeichnet, dass sie mit drei Schieberegistern (15, 16, 17) verbunden ist, von denen jedes an drei Punktregister (RP) derart angeschlossen ist, dass die auf einen Punkt bezogene Gewichtung der Signalstärken der acht Punkte der diesen einen Punkt umgebenden Matrize sichergestellt ist.

6. Schaltung nach einem der Ansprüche 1 bis 5, dadurch gekennzeichnet, dass die Mittel zum Vergleich der so gewichteten Werte jedes Elementarpunktes aus einem an die Binärausgänge der Punktregister (RP) angeschlossenen Addierer (18) bestehen, dessen Ausgang mit einem Vergleicher (19) verbunden ist, der über einen zweiten Eingang mit einer einen programmierbaren Wert liefernden Signalquelle verbunden ist, und dessen Ausgang mit einem Zähler (20) verbunden ist.

7. Schaltung nach einem der Ansprüche 1 bis 6, dadurch gekennzeichnet, dass sie über ein System für die Steuerung der Belichtungsdauer jedes Bildes in Abhängigkeit von der Durchlaufgeschwindigkeit der Gegenstände vor der Kamera verfügt.

8. Anwendung der Schaltung nach einem der Ansprüche 1 bis 7 zur Prüfung von durchsichtigen oder durchscheinenden Gegenständen (3) nach der Transparentkontrastmethode, wobei man den gesamten oder quasigesamten Gegenstand (3) quer beleuchtet und von ihm ein Bild im Gegenlicht aufnimmt.

**Claims**

1. A processing and exposure-readout command circuit in charge transfer matrix device cameras (10) for use in the inspection of objects (3), said circuit comprising detection means (12, 13, 14) marking the arrival of each object (3) at a position designated for inspection, characterized in that the said detection means (12, 13, 14) instantly trigger exposure upon the arrival of the object (3) at the inspection position and the sending of image signals by the matrix device, analysis means (15, 16, 17, RP) sequentially processing the electrical level of the successive signals transmitted by each individual point of the matrix device while weighting this level by taking account of the information supplied from the immediately neighbouring individual points, means (18, 19) comparing the thus weighted level corresponding to each individual point with a variable predetermined reference level, means (20) counting the number of individual points considered as deviating from the reference and issuing a signal to reject each object thus considered to be outside the reference.

2. Circuit according to claim 1, characterized in that it includes an electronic window generator corresponding to the contour of the objects (3) being inspected, with electronic devices superimposing the image signals corresponding to the window upon the image signals issued by the matrix device, in order to eliminate signals that are outside the window and to keep those issuing from the object, the analysis means (15, 16, 17, RP) sequentially processing the electrical level of the signal transmitted by each individual point of the matrix device within said window.

3. Circuit according to claims 1 or 2, characterized in that a system (20) receiving the said reject signal is responsible for rejecting or marking each object (3) considered to be outside the reference.

4. Circuit according to one of claims 1 to 3, characterized in that the said analysis means sequentially processing the signals transmitted by each individual point taking account of the information supplied from the immediately neighbouring individual points are shift registers arranged in series (15 to 17) corresponding to the rows, each of which having a register (RP) associated in series with it and corresponding to individual points, and that it includes a system for converting into digital form the analog electrical level of the signal issuing from each individual point, weighted by the level of the immediately neighbouring points, by making reference to a predetermined adjustable threshold.

5. Circuit according to one of claims 1 to 4, characterized in that it is associated with three row shift registers (15 to 17), three point or dot registers (RP) being associated with each of said shift registers in order to provide weighting of the signal level relating to a point or dot by the signal level of the eight points or dots of the matrix surrounding it.

6. Circuit according to claims 1 to 5, characterized in that the comparing means for the thus weighted level of each individual point or dot are comprised by an adding circuit (18) connected to all the binary outputs of the point or dot registers (RP), having its output connected to a comparator (19) connected through a second input to a signal source supplying a programmable value and the output of which is connected to a counter (20).

7. Circuit according to one of claims 1 to 6, characterized in that it includes a device for rendering the exposure time of each image dependent upon the speed with which the objects pass in front of the camera.

8. Application of the circuit in accordance with one of claims 1 to 7 to the inspection by contrast comparison of transparent or translucid objects (3) during which the totality or quasi-totality of the object (3) is illuminated transversely and an image is taken against the light.

EP 0 258 071 B1

FIG.1

FIG.2

# FIG.3

# FIG.4

TRANSPARENT

VALEUR
PROGRAMMEE